# EUROPÄISCHE PATENTSCHRIFT

(11) **EP 2 106 686 B1**
(45) Veröffentlichungstag und Bekanntmachung des Hinweises auf die Patenterteilung: **30.03.2011**
(21) Anmeldenummer: 09150270.8
(22) Anmeldetag: 09.01.2009
(51) Int. Cl.: A01D 82/02, A01D 43/10

(54) **Konditioniereinrichtung für einen Feldhäcksler**
Conditioning device for a chaff cutter
Dispositif de conditionnement pour une ramasseuse-hacheuse

(30) Priorität: 04.04.2008 DE 102008017364
(43) Veröffentlichungstag der Anmeldung: 07.10.2009
(73) Patentinhaber: CLAAS Selbstfahrende Erntemaschinen GmbH, 33428 Harsewinkel (DE)
(72) Erfinder: Dr. Bönig, Ingo, 33330 Gütersloh (DE); Haffert, Dr., Andreas, 33334 Gütersloh (DE)

(56) Entgegenhaltungen:
- EP-A- 1 316 250
- DE-A1- 19 850 534
- DE-A1-102005 053 049
- DE-U1- 29 522 165
- US-A- 2 370 560
- US-A- 3 085 384
- US-A- 3 178 870

## Beschreibung

Die vorliegende Erfindung betrifft eine Konditioniereinrichtung für eine selbstfahrende Erntemaschine, insbesondere für einen Feldhäcksler, die zum Anschlagen oder Zerkleinern von in Erntegut, insbesondere von Mais, enthaltenen Körnern dient. Wenn das gehäckselte, silierte Erntegut an Tiere verfüttert wird, ist durch das Zerkleinern die Verwertbarkeit der in den Körnern enthaltenen Nährstoffe verbessert.

Die Tendenz zu immer größeren Maschinenbreiten in der Landwirtschaft führt dazu, dass die Konditioniereinrichtungen für Feldhäcksler für immer größere Erntegutdurchsätze ausgelegt werden müssen. Durch die Verwendung eines auseinanderklappbaren Erntegutaufnehmers wie etwa eines Maisgebisses kann die Breite eines Feldhäckslers im Feldeinsatz dessen Breite bei der Fahrt auf einem öffentlichen Verkehrsweg um ein Vielfaches überschreiten. Proportional zur Breite des Maisgebisses nimmt die Menge des Erntegutes, das pro Zeiteinheit geschnitten und aufgenommen werden kann, zu. Die Breite der Konditioniereinrichtung kann nicht in gleichem Maße gesteigert werden, da sie durch die Karosseriebreite des Feldhäckslers begrenzt ist und ein zu breiter Feldhäcksler nicht mehr am öffentlichen Straβenverkehr teilnehmen dürfte. Es ist daher erforderlich, den Durchsatz der Konditioniereinrichtung bei gleich bleibender Breite zu steigern. In der Praxis hat sich gezeigt, dass dies mit den gegenwärtigen Konzepten zu einer erheblichen Beanspruchung der Konditionierwalzen, insbesondere ihrer Lager, führt. Kurze Standzeiten der Walzen bzw. der Lager sind die Folge.

DE 29522165 U1 beschreibt eine Konditioniereinrichtung für eine Erntemaschine nach dem Oberbegriff des Anspruchs 1.

Aufgabe der vorliegenden Erfindung ist daher, eine Konditioniereinrichtung für eine Erntemaschine wie etwa einen Feldhäcksler zu schaffen, die trotz eines hohen Erntegutdurchsatzes lange Standzeiten erreicht.

Die Aufgabe wird gelöst, indem bei einer Konditioniereinrichtung für eine Erntemaschine mit einer ersten und einer zweiten Walze, die in einem Erntegutkanal angeordnet und an ihren Enden in Lagern gehalten sind und einen von dem Erntegut durchlaufenen ersten Spalt begrenzen, wenigstens die erste Walze zwischen ihren Enden von wenigstens einem intermediären Lager unterstützt ist. Zum einen entlastet das intermediäre Lager die endständigen Lager, indem es einen Teil der auf das Erntegut auszuübenden Presskraft trägt. Da der Verschleiß der Lager schneller als linear mit den auftretenden Kräften wächst, ist durch die Verteilung der Last auf die wenigstens drei Lager eine erhebliche Verlängerung der Lebenserwartung der Lager bei ansonsten gegenüber einer herkömmlichen Konditioniereinrichtung unveränderter Bauweise zu erwarten.

Zum anderen ermöglicht der durch das intermediäre Lager verringerte Abstand zwischen benachbarten Lagern, die erste Walze bei unveränderter Biegefestigkeit wesentlich leichter zu bauen als eine endständig gelagerte Walze, so dass sich aus der Gewichtsverminderung eine abermalige Entlastung der Lager und dazu noch eine Kraftstoffersparnis beim Antrieb der Walzen ergibt.

Um den Durchmesser des intermediären Lagers gering zu halten, weist die erste Walze vorzugsweise einen verengten Abschnitt auf, der durch das intermediäre Lager oder vorzugsweise durch zwei intermediäre Lager nebeneinander abgestützt ist. Durch die Verwendung von zwei endständigen und zwei nebeneinanderliegenden intermediären Lagern ist eine gleichmäßige Lastverteilung auf alle vier Lager erreichbar, so dass bei Verwendung des gleichen Lagertyps für alle vier Lager die größtmögliche Lebensdauerverlängerung erreichbar ist.

Vorzugsweise ist wenigstens eine der Walzen nachgiebig gelagert, um eine Aufweitung des Spalts zu ermöglichen, wenn zum Beispiel ein im Erntegutstrom enthaltener Stein durchgelassen werden muss.

Wenn beiderseits des verengten Abschnitts liegende Bereiche der ersten Walze in Höhe des verengten Abschnitts gegeneinander schwenkbeweglich sind, dann sind vorzugsweise die Lager der ersten Walze nachgiebig. Durch die Schwenkbeweglichkeit reduziert sich das Ausmaß, in dem, wenn einer der Bereiche der ersten Walze einem Stein ausweichen muss, der zweite Bereich der Ausweichbewegung folgen muss. Die für die Ausweichbewegung auszulenkende Masse ist daher geringer, der Stein kann den Spalt leichter passieren, und die Beanspruchung der Walzen durch den Stein ist vermindert.

Um ein Schwenken der zwei Bereiche der ersten Walze gegeneinander ohne Materialermüdung zu ermöglichen, sind diese vorzugsweise in Höhe des verengten Abschnitts durch ein wenigstens ein Gelenk verbunden.

Besonders bevorzugt ist, dass der verengte Abschnitt ein Wellenstück umfasst, das mit beiden Bereichen der ersten Walze durch ein Gelenk verbunden ist. Indem, wenn einer der Walzenabschnitte eine Ausweichbewegung ausführt, das Wellenstück schwenkt, wird eine Übertragung der Ausweichbewegung auf den anderen Walzenabschnitt vermieden.

Ein Lagerbock, der das intermediäre Lager (oder die intermediären Lager) der ersten Walze aufnimmt, stützt vorzugsweise auch die zweite Walze, um an dieser dieselben Vorteile wie an der ersten Walze zu erreichen.

Um zu verhindern, dass Erntegut sich vor dem Lagerbock ansammelt und eine Verstopfung des Erntegutkanals bewirkt, ist dem Lagerbock vorzugsweise im Erntegutkanal ein entgegen der Erntegutförderrichtung zugespitzter Keil vorgelagert.

Wenn den Konditionierwalzen in an sich bekannter Weise eine Häckseltrommel vorgelagert ist, reicht ein Grat des Keils vorzugsweise bis wenigstens in unmittelbare Nähe des Umfangs der Häckseltrommel, so dass Erntegut, welches auf einem der Häckseltrommel zugewandten Grat des Keils hängen bleibt, durch deren Drehung sofort wieder abgestreift wird. Grundsätzlich ist es hierfür ausreichend, wenn der Grat bis auf wenige Zentimeter an den Umfang heranreicht, da Erntegut, das sich auf dem Grat abzulagern beginnt, von der Häckseltrommel sofort wieder abgestreift wird, sobald die Dicke der Ablagerung groß genug ist, um von den Messern erfasst zu werden.

Um das Abstreifen zu erleichtern, ist der Grat des Keils zweckmäßigerweise kreisbogenförmig, wobei vorzugsweise der Mittelpunkt des Kreisbogens mit der Achse der Häckseltrommel zusammenfällt.

Wenn der Keil sich zwischen den Erntegutkanal oben und unten begrenzenden Leitplatten erstreckt, ist es zum Erleichtern des Abstreifens von hängen bleibendem Häckselgut vorteilhaft, wenn ein oberes Ende des Grates über eine der Häckseltrommel zugewandte Vorderseite der oberen Leitplatte zur Häckseltrommel hin vorspringt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Figur 1: eine schematische Draufsicht auf eine er- findungsgemäße Konditioniereinrichtung für einen Feldhäcksler mit vorgelagerter Häckseltrommel;
- Fig. 2: einen schematischen Längsschnitt der Kon- ditioniereinrichtung aus Fig. 1;
- Fig. 3: eine perspektivische Ansicht einer Kondi- tioniereinrichtung mit nachgeordnetem Nachbeschleuniger gemäß einer bevorzugten Ausgestaltung der Erfindung; und
- Fig. 4: einen schematischen Schnitt analog Fig. 1 gemäß einer weiteren Ausgestaltung der Erfindung.

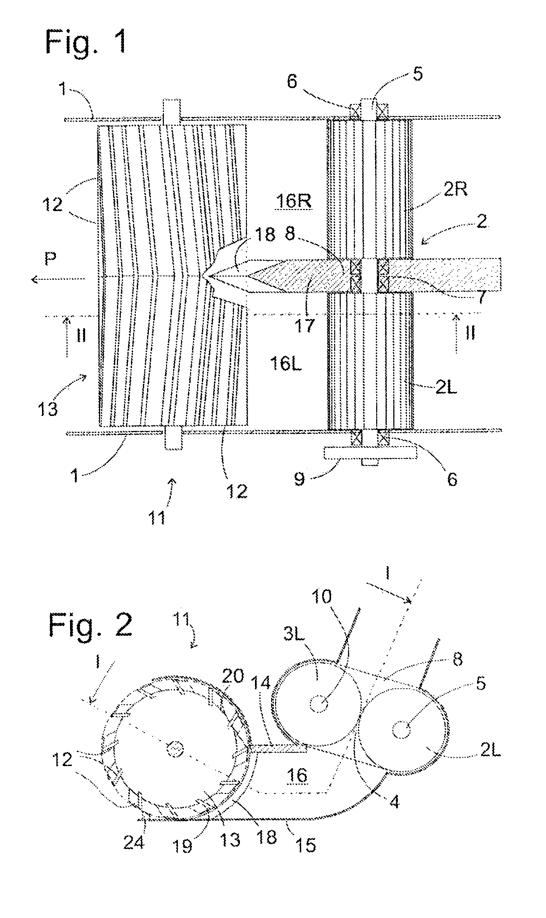

Die Fig. 1 bis 3 zeigen jeweils schematische Schnitte bzw. eine perspektivische Ansicht einer erfindungsgemäßen Konditioniereinrichtung eines selbstfahrenden Feldhäckslers. Die Konditioniereinrichtung umfasst in einem Gehäuse 1 eine untere und eine obere Konditionierwalze 2 bzw. 3. Die Schnittebene der Fig. 1, in Fig. 2 mit I-I bezeichnet, verläuft durch einen Spalt 4 zwischen den Konditionierwalzen 2, 3, so dass in Fig. 1 nur die untere Konditionierwalze 2 zu sehen ist. Die Konditionierwalzen 2, 3 sind jeweils durch eine mittige Verjüngung in linke und rechte Abschnitte 2L, 2R bzw. 3L, 3R gegliedert. Die Abschnitte 2L, 2R, 3L, 3R sind Hohlkörper mit einer konturierten Mantelfläche und zwei die Mantelfläche auf einer Welle abstützenden, Stirnwände der Walzen 2, 3 bzw. Seitenwände der Verjüngung bildenden Kreisscheiben. Weitere Kreisscheiben können im Innern der Konditionierwalzenabschnitte 2L, 2R, 3L, 3R axial verteilt sein, um den Mantelflächen die erforderliche Steifigkeit zu verleihen.

Eine Welle 5, die die Walze 2 trägt, erstreckt sich quer durch das gesamte Gehäuse 1 und ist durch Lager 6 in dessen Seitenwänden sowie durch zwei Lager 7 in einem mittig zwischen den Seitenwänden angeordneten Lagerbock 8 gehalten. Da die Lager 7 in dem Lagerbock 8 paarweise angeordnet sind, ist jedes von ihnen genauso belastet wie die Lager 6 in den Seitenwänden, so dass ein gleiches Modell für die Lager 6 und 7 verwendet werden kann.

Die Walze 2 ist über ein Riemen- oder Kettenrad 9 drehangetrieben, das außerhalb des Gehäuses 1 an einem Ende der Welle 3 montiert ist.

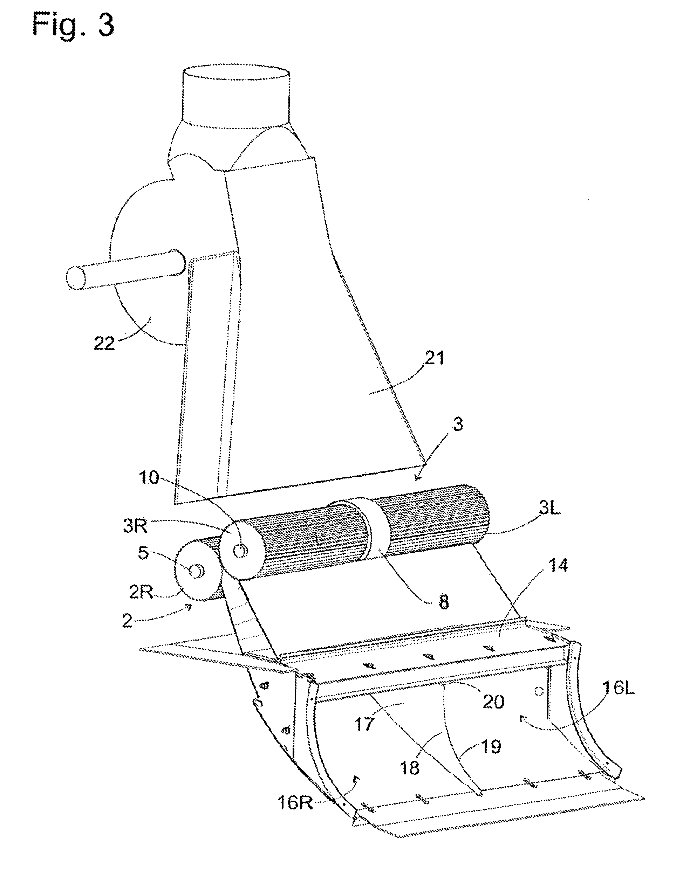

Die obere Walze 3 hat denselben mittig verjüngten Aufbau wie die Walze 2, wie insbesondere aus der perspektivischen Ansicht der Fig. 3 deutlich wird. Auch sie ist durch Lager an den Enden ihrer Welle 10 sowie in dem Lagerbock 8 aufgenommene, in mittige Verjüngung zwischen den Abschnitten 3L, 3R der Walze 3 eingreifende Lager unterstützt.

Die Wellen 5, 10 sind so drehangetrieben, dass die oberen und unteren Konditionierwalzen 3 bzw. 2 mit unterschiedlichen Umfangsgeschwindigkeiten rotieren. So wird dem Spalt 4 zwischen den Walzen zugeführtes Erntegut beim Durchgang durch den Spalt 4 zerrieben, und darin enthaltene Körner werden zerkleinert.

Das dem Spalt 4 zugeführte Erntegut rührt her von einem Häckselwerk 11. Das Häckselwerk 11 hat ein in Fig. 2 nur unvollständig gezeigtes, im wesentlichen zylindrisches Gehäuse, in dem eine drehantreibbare Häckseltrommel 13 mit Messern 12 sowie eine fest stehende Gegenschneide 24 angeordnet sind. Erntegut, das durch eine nicht dargestellte Aufnahmevorrichtung wie etwa ein Maisgebiss geschnitten und dem Häckselwerk 11 zugeführt wird, wird darin durch die Drehung der Häckseltrommel 13 zerkleinert und in einen durch obere und untere Leitplatten 14, 15 sowie die Seitenwände des Gehäuses 1 begrenzten, zu dem Spalt 4 führenden Kanal 16 hinein geschleudert.

Die Häckseltrommel 13 kann als ein im Wesentlichen geschlossener Zylinder ausgeführt sein, der an seiner Mantelfläche mit den Messern 12 besetzt ist. Im hier betrachteten Fall umfasst die Häckseltrommel 13 mehrere auf einer Welle montierte Kreisscheiben, die untereinander über die an ihrem Rand befestigten lang gestreckten Messer 12 verbunden sind. Die Messer haben, wie in Fig. 1 zu sehen, V-förmig verlaufende Schneidkanten, um bereits während des Häckselns das Erntegut zur Mitte des Gehäuses 1 zu treiben. Dies begünstigt insbesondere dann eine gleichmäßige Verteilung des Ernteguts über die Breite des Spalts 4, wenn die Aufnahmevorrichtung in dem Fachmann vertrauter Weise wesentlich breiter als das Häckselwerk 11 ist und aus der deshalb unvermeidlichen Bündelung des Erntegutstroms zwischen Aufnahmevorrichtung und Häckselwerk 11 eine von der Mitte zu den Seiten hin zunehmende Dichte des Erntegutstroms im Häckselwerk 11 resultiert.

Der Kanal 16 ist, wie in Fig. 1 gezeigt, durch eine mittige Trennwand 17 in einen linken und einen rechten Teilkanal 16L, 16R gegliedert, die jeweils zu den linken bzw. rechten Abschnitten 2L, 3L bzw. 2R, 3R der Konditionierwalzen 2, 3 führen. Zum Häckselwerk 11 hin läuft die Trennwand 17 in einen Keil 18 aus. Ein der Häckseltrommel 13 zugewandter scharfkantiger Grat 19 an der Spitze des Keils 18 hat einen im wesentlichen kreisbogenförmigen, auf die Achse der Häckseltrommel 13 zentrierten Verlauf, so dass, wie in Fig. 1 zu sehen, die Messer 12 der Häckseltrommel 13 in geringem Abstand vor dem Grat 19 entlang streichen. Von der Häckseltrommel 13 auf den Grat 19 geschleudertes und daran hängen gebliebenes Häckselgut wird so durch die Drehung der Messer 12 im Gegenuhrzeigersinn mitgenommen und an einer über eine Vorderkante der oberen Leitplatte 14 zur Häckseltrommel 13 hin vorspringenden Ecke 20 des Grats 19 abgestreift und weiter gehäckselt. Eine Verstopfung des Kanals 16 durch sich am Keil 18 verfangendes Häckselgut ist so ausgeschlossen.

Einer nicht gezeichneten Abwandlung zufolge können die einander zugewandten Kreisscheiben der Konditionierwalzen 2R, 2L durch ein die Welle 5 mittig verstärkendes Rohrstück verbunden sein. Dies erlaubt es, die Dicke des Lagerbocks 8 zu reduzieren, indem anstelle der in Fig. 1 gezeigten zwei Lager ein einzelnes Lager 7 von größerem Durchmesser vorgesehen wird.

Fig. 3 zeigt eine perspektivische Ansicht der erfindungsgemäßen Konditioniereinrichtung. Das Häckselwerk ist in dieser Ansicht weggelassen, so dass der Eingangsbereich des Kanals 16 bzw. seiner Teilkanäle 16L, 16R und die den Kanal 16 unterteilende, in den Keil 18 auslaufende Trennwand 17 deutlich sichtbar sind. Auch die über die obere Leitplatte 14 vorspringende Ecke 20, über die auf dem Keil 18 hängen gebliebenes Häckselgut abgestreift werden kann, ist gut zu erkennen.

Häckselgut, das den Spalt 4 passiert hat, wird in einem Sammeltrichter 21 gebündelt und einem Nachbeschleuniger 22 zugeführt. Der Nachbeschleuniger 22 dient in an sich bekannter Weise dazu, das Erntegut so weit zu beschleunigen, dass es einen hier nicht dargestellten Auswurfkrümmer passieren und über diesen einen Sammelbehälter in einem neben dem Feldhäcksler herfahrenden Hilfsfahrzeug erreichen kann.

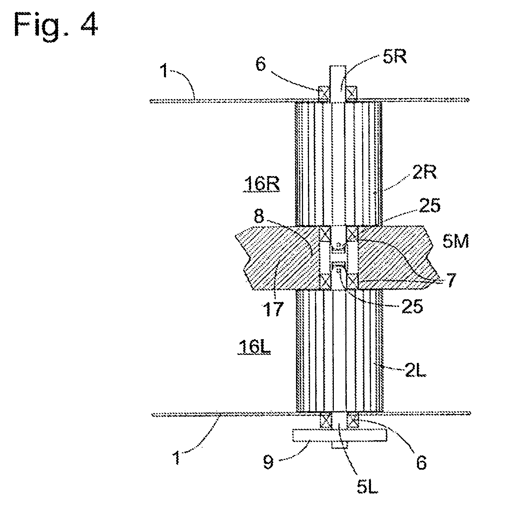

Fig. 4 zeigt eine weiterentwickelte Ausgestaltung der erfindungsgemäßen Konditioniereinrichtung in einem zu Fig. 1 analogen Schnitt, wobei das - gegenüber Fig. 1 unveränderte - Häckselwerk weggelassen ist.

Die Welle 5 ist in dieser Ausgestaltung in zwei Abschnitte 5L, 5R entsprechend den Walzenabschnitten 2L, 2R unterteilt, die untereinander durch zwei Kardangelenke 25 und einen innerhalb des Lagerbocks 8 angebrachten Wellenabschnitt 5M verbunden sind. Wenn bei dieser Ausgestaltung ein Stein den Spalt 4 zwischen den Walzenabschnitten 2L, 3L in der Nähe des Lagerbocks 8 passiert, so ist es im Wesentlichen das Lager 7 des Abschnitts 2L, das nachgibt und eine Ausweichbewegung des Walzenabschnitts 2L ermöglicht. Die Auslenkung des Wellenabschnitts 5L in dessen Lager 7 führt zu einer Schrägstellung des intermediären Wellenabschnitts 5M; der Wellenabschnitt 5R wird jedoch nicht mit verschoben. So ist die Masse, die für eine Ausweichbewegung ausgelenkt werden muss, nur noch halb so groß wie bei einer Walze mit ungegliederter Welle, und die Gefahr, dass durch einen durchlaufenden Stein der Mantel der Walze beschädigt wird, ist erheblich verringert.

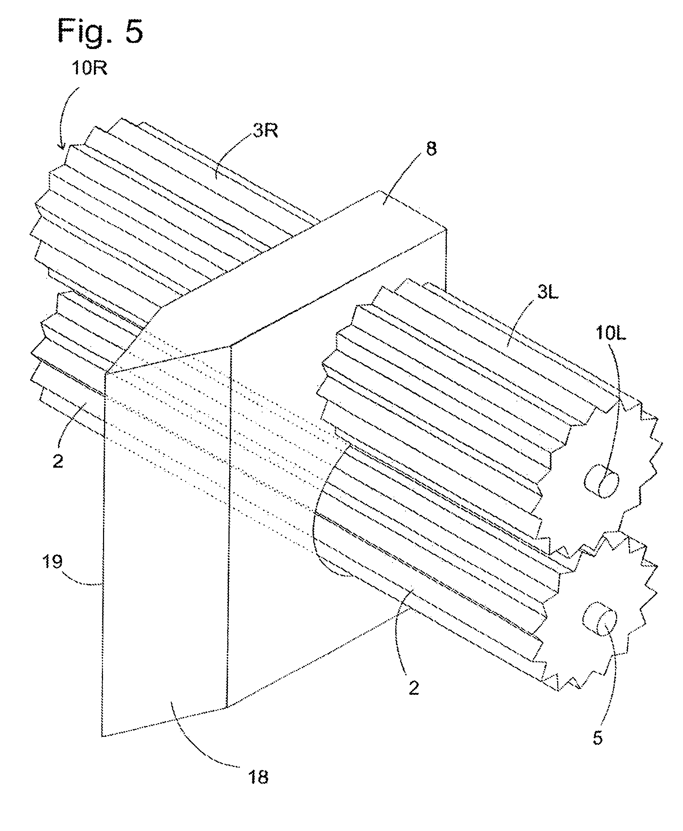

Die in Fig. 5 in einer perspektivischen Ansicht gezeigte Konditioniereinrichtung unterscheidet sich von der Ausgestaltung der Fig. 1 bis 3 in erster Linie dadurch, dass die untere Walze 2 nicht unterteilt ist, sondern sich durchgehend über die gesamte Breite des (in Fig. 5 nicht gezeigten) Gehäuses 1 und durch eine Öffnung des Lagerbocks 8 erstreckt, ohne von diesem unterstützt zu sein. Lediglich die Walze 3 ist in zwei Abschnitte 3L, 3R unterteilt, die unabhängig voneinander nachgiebig in dem Lagerbock 8 sowie an den Seitenwänden des Gehäuses 1 gelagert sind. Die Welle 5 der Walze 2 ist an den Seitenwänden des Gehäuses 1 in (nicht dargestellten) nicht nachgiebigen Lagern gehalten. Die feste Lagerung der Walze 2 hat auf das Verhalten der Konditioniereinrichtung keinen nennenswerten Einfluss, denn selbst bei nachgiebiger Lagerung der Walze 2 wären es im Wesentlichen die im Vergleich zu ihr kürzeren und leichteren Walzenabschnitte 3L, 3R, die beim Durchgang eines Steins durch den Spalt 4 eine Ausweichbewegung ausführen würden.

### Bezugszeichen

- 1: Gehäuse
- 2: Konditionierwalze
- 3: Konditionierwalze
- 4: Spalt
- 5: Welle
- 6: Lager
- 7: Lager
- 8: Lagerbock
- 9: Kettenrad
- 10: Welle
- 11: Häckselwerk
- 12: Messer
- 13: Häckseltrommel
- 14: Leitplatte
- 15: Leitplatte
- 16: Kanal
- 17: Trennwand
- 18: Keil
- 19: Grat
- 20: Ecke
- 21: Sammeltrichter
- 22: Nachbeschleuniger
- 23: Förderrichtung
- 24: Gegenschneide
- 25: Kardangelenk

## Patentansprüche

1. Konditioniereinrichtung für eine Erntemaschine mit einer ersten und einer zweiten Walze (2, 3), die in einem Erntegutkanal (16) angeordnet und an ihren Enden in Lagern (6) gehalten sind und einen von dem Erntegut durchlaufenen Spalt (4) begrenzen, **dadurch gekennzeichnet, dass** wenigstens die erste Walze (2; 3) zwischen ihren Enden von wenigstens einem intermediären Lager (7) unterstützt ist.

2. Konditioniereinrichtung nach Anspruch 1, **dadurch gekennzeichnet, dass** das intermediäre Lager (7) einen verengten Abschnitt der ersten Walze (2; 3) abstützt.

3. Konditioniereinrichtung nach Anspruch 1, **dadurch gekennzeichnet, dass** zwei intermediäre Lager (7) nebeneinander einen verengten Abschnitt der ersten Walze (2; 3) abstützen.

4. Konditioniereinrichtung nach einem der vorhergehenden Ansprüche, **dadurch gekennzeichnet, dass** die Lager (6; 7) wenigstens einer der Walzen (2; 3) nachgiebig sind.

5. Konditioniereinrichtung nach Anspruch 4, **dadurch gekennzeichnet, dass** die Lager der ersten Walze (2; 3) nachgiebig sind und dass beiderseits des verengten Abschnitts liegende Bereiche (2L; 2R; 3L, 3R) der ersten Walze (2; 3) in Höhe des verengten Abschnitts gegeneinander schwenkbeweglich sind.

6. Konditioniereinrichtung nach Anspruch 5, **dadurch gekennzeichnet, dass** die zwei Bereiche (2L; 2R) der ersten Walze (2) in Höhe des verengten Abschnitts durch wenigstens ein Gelenk verbunden sind.

7. Konditioniereinrichtung nach Anspruch 6, **dadurch gekennzeichnet, dass** der verengte Abschnitt ein Wellenstück (5M) umfasst, das mit beiden Bereichen (2L; 2R) der ersten Walze (2) durch ein Gelenk (25) verbunden ist.

8. Konditioniereinrichtung nach einem der vorhergehenden Ansprüche, **dadurch gekennzeichnet, dass** das intermediäre Lager (7) in einem Lagerbock (8) aufgenommen ist, der auch die zweite Walze (3; 2) lagert.

9. Konditioniereinrichtung nach Anspruch 8, **dadurch gekennzeichnet, dass** dem Lagerbock (8) im Erntegutkanal (16) ein entgegen der Erntgutförderrichtung (23) zugespitzter Keil (18) vorgelagert ist.

10. Konditioniereinrichtung nach Anspruch 9, **dadurch gekennzeichnet, dass** den Konditionierwalzen (2L; 3L; 2R; 3R) eine Häckseltrommel (13) vorgelagert ist und dass ein Grat (19) des Keils (18) wenigstens bis in unmittelbare Nähe des Umfangs der Häckseltrommel (13) reicht.

11. Konditioniereinrichtung nach Anspruch 10, **dadurch gekennzeichnet, dass** der Grat (19) des Keils (18) kreisbogenförmig ist.

12. Konditioniereinrichtung nach Anspruch 10 oder 11, **dadurch gekennzeichnet, dass** der Keil (18) sich zwischen den Erntegutkanal (16) oben und unten begrenzenden Leitplatten (14; 15) erstreckt, und dass ein oberes Ende (20) des Grates (19) über eine der Häckseltrommel (13) zugewandte Vorderkante der oberen Leitplatte (14) zur Häckseltrommel (13) hin vorspringt.

13. Konditioniereinrichtung nach einem der vorhergehenden Ansprüche, **dadurch gekennzeichnet, dass** den Walzen (2; 3) ein Sammeltrichter (21) für das Erntegut nachgeordnet ist.

## Claims

1. A conditioning apparatus for a harvester comprising a first and a second roller (2, 3) which are arranged in a crop material passage (16) and are held at their ends in bearings (6) and define a gap (4) through which the crop material passes, **characterised in that** at least the first roller (2; 3) is supported between its ends by at least one intermediate bearing (7).

2. A conditioning apparatus according to claim 1 **characterised in that** the intermediate bearing (7) supports a narrowed portion of the first roller (2; 3).

3. A conditioning apparatus according to claim 1 **characterised in that** two intermediate bearings (7) support in mutually juxtaposed relationship a narrowed portion of the first roller (2; 3).

4. A conditioning apparatus according to one of the preceding claims **characterised in that** the bearings (6, 7) of at least one of the rollers (2; 3) are yielding.

5. A conditioning apparatus according to claim 4 **characterised in that** the bearings of the first roller (2; 3) are yielding and that regions (2L; 2R; 3L, 3R) on both sides of the narrowed portion of the first roller (2; 3) are pivotably movable relative to each other at the level of the narrowed portion.

6. A conditioning apparatus according to claim 5 **characterised in that** the two regions (2L; 2R) of the first roller (2) are connected by at least one joint at the level of the narrowed portion.

7. A conditioning apparatus according to claim 6 **characterised in that** the narrowed portion includes a shaft portion (5M) which is connected to both regions (2L; 2R) of the first roller (2) by a joint (25).

8. A conditioning apparatus according to one of the preceding claims **characterised in that** the intermediate bearing (7) is accommodated in a bearing block (8) which also mounts the second roller (3; 2).

9. A conditioning apparatus according to claim 8 **characterised in that** arranged upstream of the bearing block (8) in the crop material passage (16) is a wedge (18) which is tapered in opposite relationship to the crop material conveyor direction (23).

10. A conditioning apparatus according to claim 9 **characterised in that** a chopping drum (13) is disposed upstream of the conditioning rollers (2L; 3L; 2R; 3R) and that an edge (19) of the wedge (18) extends at least into the immediate proximity of the periphery of the chopping drum (13).

11. A conditioning apparatus according to claim 10 **characterised in that** the edge (19) of the wedge (18) is in the shape of a circular arc.

12. A conditioning apparatus according to claim 10 **characterised in that** the wedge (18) extends between guide plates (14; 15) defining the crop material passage (16) above and below and an upper end (20) of the edge (19) projects beyond a front edge, towards the chopping drum (13), of the upper guide plate (14) towards the chopping drum (13).

13. A conditioning apparatus according to one of the preceding claims **characterised in that** arranged downstream of the rollers (2; 3) is a collecting hopper (21) for the crop material.

## Revendications

1. Dispositif de conditionnement pour une machine de récolte, comportant un premier et un deuxième rouleau (2, 3) qui sont disposés dans un conduit de produit de récolte (16) et maintenus à leurs extrémités dans des paliers (6) et qui délimitent une fente (4) à travers laquelle passe le produit de récolte, **caractérisé en ce qu'**au moins le premier rouleau (2 ; 3) est soutenu par au moins un palier intermédiaire (7) entre ses extrémités.

2. Dispositif de conditionnement selon la revendication 1, **caractérisé en ce que** le palier intermédiaire (7) soutient une portion rétrécie du premier rouleau (2 ; 3).

3. Dispositif de conditionnement selon la revendication 1, **caractérisé en ce que** deux paliers intermédiaires (7) juxtaposés soutiennent une portion rétrécie du premier rouleau (2 ; 3).

4. Dispositif de conditionnement selon une des revendications précédentes, **caractérisé en ce que** les paliers (6 ; 7) d'au moins un des rouleaux (2 ; 3) sont flexibles.

5. Dispositif de conditionnement selon la revendication 4, **caractérisé en ce que** les paliers du premier rouleau (2 ; 3) sont flexibles et **en ce que** des zones (2L ; 2R ; 3L, 3R) situées des deux côtés de la portion rétrécie du premier rouleau (2 ; 3) peuvent pivoter l'une par rapport à l'autre à hauteur de la portion rétrécie.

6. Dispositif de conditionnement selon la revendication 5, **caractérisé en ce que** les deux zones (2L ; 2R) du premier rouleau (2) sont reliées par au moins une articulation à hauteur de la portion rétrécie.

7. Dispositif de conditionnement selon la revendication 6, **caractérisé en ce que** la portion rétrécie comprend un tronçon d'arbre (5M) qui est relié aux deux zones (2L ; 2R) du premier rouleau (2) par une articulation (25).

8. Dispositif de conditionnement selon une des revendications précédentes, **caractérisé en ce que** le palier intermédiaire (7) est monté dans un support de palier (8) qui supporte aussi le deuxième rouleau (3 ; 2).

9. Dispositif de conditionnement selon la revendication 8, **caractérisé en ce qu'**un coin (18) effilé à l'opposé du sens de transport de produit de récolte (23) est placé avant le support de palier (8) dans le conduit de produit de récolte (16) .

10. Dispositif de conditionnement selon la revendication 9, **caractérisé en ce qu'**un tambour de hachage (13) est placé avant les rouleaux conditionneurs (2L ; 3L ; 2R ; 3R) et qu'une arête (19) du coin (18) s'étend au moins jusqu'à proximité immédiate de la circonférence du tambour de hachage (13).

11. Dispositif de conditionnement selon la revendication 10, **caractérisé en ce que** l'arête (19) du coin (18) est en forme d'arc de cercle.

12. Dispositif de conditionnement selon la revendication 10 ou 11, **caractérisé en ce que** le coin (18) s'étend entre des plaques de guidage (14 ; 15) qui limitent en haut et en bas le conduit de produit de récolte (16), et qu'une extrémité supérieure (20) de l'arête (19) fait saillie en direction du tambour de hachage (13) au-delà d'un bord avant de la plaque de guidage supérieure (14) tourné vers le tambour de hachage (13) .

13. Dispositif de conditionnement selon une des revendications précédentes, **caractérisé en ce qu'**un entonnoir collecteur (21) pour le produit de récolte est placé après les rouleaux (2 ; 3).
